# EUROPEAN PATENT APPLICATION

(11) **EP 3 910 024 A1**
(43) Date of publication of application: **17.11.2021**
(21) Application number: 20763350.4
(22) Date of filing: 14.01.2020
(51) Int. Cl.: C08L 75/04, C08G 18/00, C08G 18/08

(54) **AQUEOUS DISPERSION OF URETHANE RESIN, LEATHER SHEET, AND METHOD FOR PRODUCING LEATHER SHEET**

(30) Priority: 25.02.2019 JP 2019031590
(71) Applicant: DIC Corporation, Tokyo 174-8520 (JP)
(72) Inventor: TETSUI Tomohiro, Takaishi-shi, Osaka 592-0001 (JP)
(74) Representative: Gerauer, Marc Philippé
(86) International application number: PCT/JP2020/000830
(87) International publication number: WO 2020/174899

(57) **Abstract**

The present invention provides an aqueous dispersion of a urethane resin (X) that uses a nonionic group-containing compound (a1) as a raw material, wherein the nonionic group-containing compound (a1) has a use rate of 5% by mass or less based on the total mass of raw materials constituting the urethane resin (X), the aqueous dispersion has an anionic emulsifier (Y1) content of 7 parts by mass or less with respect to 100 parts by mass of the urethane resin (X) and does not include an organic solvent during a production step. Further, the invention provides a leather sheet, wherein a coagulated product of the urethane resin aqueous dispersion is present in a fiber substrate. It is preferable that in the leather sheet, a coagulated product of the urethane resin aqueous dispersion is present in the fiber substrate.

## Description

### Technical Field

The present invention relates to a urethane resin aqueous dispersion, a leather sheet, and a method for producing a leather sheet.

### Background Art

Urethane resin is widely used in the production of leather sheets (synthetic leather and artificial leather), coating agents, adhesives, gloves, clothing, etc. because of its mechanical strength and good texture. As the urethane resin, solvent-based urethane resins containing N,N-dimethylformamide (DMF) have been a mainstream. However, against the background of DMF regulations in Europe, reinforcement of VOC emission regulations in China and Taiwan, and DMF regulations by major apparel makers, environmental harmonization measures based on weak solvent, water system, solvent-free and the like are required.

Conventionally, in solvent-based urethane resins, in order to give the leather sheet a volume, elasticity, and flexibility similar to that of natural leather, the urethane resin is supported inside non-woven fabric by a wet coagulation method in which the urethane resin is impregnated inside the non-woven fabric, is contacted with water and coagulated. As a method for removing a solvent in this application, a urethane resin aqueous dispersion having a low viscosity is used in order to impregnate urethane resin with minute fiber intervals. Further, in order to uniformly coagulate the urethane resin, a urethane resin aqueous dispersion imparted with thermal coagulation has been developed (see, for example, Patent Literature 1).

However, the urethane resin aqueous dispersion developed so far have a drawback that the urethane resin is easily detached in a post-processing step (such as microfiber formation and dyeing of non-woven fabric fibers, hereinafter referred to as "post-processing step" for short). This is because hydrophilic groups contained in the urethane resin are hydrated and further easily hydrolyzed in a hot-water and/or mechanical kneading treatment in the post processing step.

As a countermeasure, it has been studied to use a carbodiimide cross-linking agent in combination with a urethane resin aqueous dispersion containing an anionic urethane resin to react with a hydrophilic group for sealing. However, there have been problems such as deterioration of texture and cost increase. Moreover, when general acetic acid is used in pH adjustment of a dyeing step, the crosslinked structure deteriorates, the urethane resin is detached, and when other acidic substances (phosphoric acid, etc.) are used, there is a problem of wastewater treatment.

### Citation List

### Patent Literature

PTL 1: JP-A-2016-84463

### Summary of Invention

### Technical Problem

A problem to be solved by the invention is to provide a urethane resin aqueous dispersion with which a fiber substrate can be impregnated, which is capable of thermal coagulation, which reduces the detachment of the urethane resin from the fiber substrate in a step of dyeing an impregnated substrate, and which is capable of obtaining an impregnated substrate having an excellent texture.

### Solution to Problem

The invention provides an aqueous dispersion of a urethane resin (X) that uses a nonionic group-containing compound (a1) as a raw material, wherein the nonionic group-containing compound (a1) has a use rate of 5% by mass or less based on the total mass of raw materials constituting the urethane resin (X), the aqueous dispersion has an anionic emulsifier (Y1) content of 7 parts by mass or less with respect to 100 parts by mass of the urethane resin (X) and does not include an organic solvent during a production step.

Further, the invention provides a leather sheet, wherein a coagulated product of the urethane resin aqueous dispersion is present in a fiber substrate.

Moreover, the invention provides a method for producing a leather sheet, including impregnating a fiber substrate with the urethane resin aqueous dispersion and thermally coagulating the urethane resin aqueous dispersion. Advantageous Effects of Invention

The urethane resin aqueous dispersion of the invention can be impregnated into a fiber substrate to be thermally coagulated, can reduce the detachment of the urethane resin from the fiber substrate in a step of dyeing an impregnated substrate, and can obtain an impregnated substrate having an excellent texture. Therefore, the urethane resin aqueous dispersion of the invention can be suitably used to produce a leather sheet.

### Description of Embodiments

The urethane resin aqueous dispersion of the invention is an aqueous dispersion of a urethane resin (X) that uses a nonionic group-containing compound (a1) as a raw material, wherein the nonionic group-containing compound (a1) has a use rate of 5% by mass or less based on the total mass of raw materials constituting the urethane resin (X), the aqueous dispersion has an anionic emulsifier (Y1) content of 7 parts by mass or less with respect to 100 parts by mass of the urethane resin (X) and does not include an organic solvent during a production step.

In the invention, the use rate of the nonionic group-containing compound (a1), which is a raw material of the urethane resin (X), is necessary to be 5% by mass or less based on the total mass of the raw materials constituting the urethane resin (X). The nonionic group of the compound (a1) is hydrated in a hot water environment during the post-processing step, and the urethane resin swells with water and causes a decrease in strength. Therefore, the urethane resin is destroyed by external pressure such as rubbing in the dyeing step and tends to be detached. In the invention, by setting the use rate of the compound (a1) within the aforementioned range, it is possible to reduce the detachment of the urethane resin in the post-processing step (hereinafter referred to as "resin detachment" for short), and as a result, an impregnated substrate having a good texture can be obtained. From the viewpoint of further reducing the resin detachment, the use rate of the compound (a1) is preferably in the range of 0.001 to 5.5% by mass, more preferably in the range of 0.1 to 5% by mass, and further more preferably in the range of 0.3 to 4.5% by mass based on the total mass of the raw materials constituting the urethane resin (X).

In addition, in the invention, the content of the anionic emulsifier (Y1) in the aqueous dispersion is necessary to be 7 parts by mass or less with respect to 100 parts by mass of the urethane resin (X) (= solid content). The anionic emulsifier (Y1) acts as a plasticizer in the aqueous dispersion and easily swells with water, and thus it tends to cause the urethane resin to be detached in the post-processing step. In the invention, by setting the anionic emulsifier in the aqueous dispersion in the aforementioned range, it is possible to reduce the resin detachment, and as a result, an impregnated substrate having a good texture can be obtained. The content of the anionic emulsifier (Y1) is preferably in the range of 0 to 5% by mass with respect to 100 parts by mass of the urethane resin (X) (= solid content) from the viewpoint of further reducing the resin detachment.

With respect to the anionic emulsifier (Y1), anionic emulsifiers such as a fatty acid salt, e.g., sodium oleate, an alkylsulfate salt, an alkylbenzenesulfonic acid salt, an alkylsulfosuccinic acid salt, a naphthalenesulfonic acid salt, a polyoxyethylenealkylsulfuric acid salt, an alkanesulfonate sodium salt, and an alkyldiphenyl ether sulfonate sodium salt may be used. These emulsifiers may be used alone or in combination of two or more.

The urethane resin (X) can be dispersed in water, and for example, a reaction product of the nonionic group-containing compound (a1), a polyol (a2), and a polyisocyanate (a3) may be used.

With respect to the nonionic group-containing compound (a1), for example, a compound having an oxyethylene structure may be used. Examples of the compound having an oxyethylene structure include polyethylene glycol, polyoxyethylene polyoxypropylene glycol, polyoxyethylene polyoxytetramethylene glycol, polyethylene glycol dimethyl ether, and polyethylene glycol monoalkyl ether. These compounds may be used alone or in combination of two or more. Among these compounds, polyethylene glycol and/or polyoxyethylene polyoxypropylene glycol is preferably used because the hydrophilicity can be more easily controlled and the resin detachment can be reduced.

The number average molecular weight of the nonionic group-containing compound (a1) is preferably in the range of 200 to 10,000, more preferably in the range of 300 to 3,000, and further more preferably in the range of 300 to 2,000 from the viewpoint of obtaining more excellent emulsifying property and water dispersion stability. The number average molecular weight of the nonionic group-containing compound (a1) indicates a value measured by a gel permeation column chromatography (GPC) method.

With respect to the polyol (a2), for example, a polyether polyol, a polyester polyol, a polyacrylic polyol, a polycarbonate polyol, a polybutadiene polyol, or the like other than the compound (a1) may be used. These polyols may be used alone or in combination of two or more.

The number average molecular weight of the polyol (a2) is preferably in the range of 500 to 100,000, and more preferably in the range of 800 to 10,000 from the viewpoint of the mechanical strength of an obtained film. The number average molecular weight of the polyol (a2) indicates a value measured by a gel permeation column chromatography (GPC) method.

The use rate of the polyol (a2) is preferably in the range of 40 to 90% by mass, and more preferably in the range of 50 to 80% by mass, based on the total mass of the raw materials constituting the urethane resin (X) from the viewpoint of obtaining even more excellent mechanical strength.

A chain extender (a2-1) having a molecular weight of less than 500 (preferably in the range of 50 to 450) may be used in combination with the polyol (a2) when necessary. With respect to the chain extender (a2-1), for example, a chain extender having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane; a chain extender having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine may be used. These chain extenders may be used alone or in combination of two or more. The molecular weight of the chain extender (a2-1) indicates a value calculated from a chemical formula.

When the chain extender (a2-1) is used, it is preferable to use a chain extender having an amino group (hereinafter referred to as "amine-based chain extender" for short) from the viewpoint of obtaining even more excellent mechanical strength and texture by introducing a urea group, and it is more preferable to use an amine-based chain extender having a molecular weight in the range of 30 to 250 from the viewpoint of obtaining more excellent emulsifying property and water dispersion stability even if the urethane resin (X) is highly solidified. When two or more kinds of chain extenders are used in combination as the chain extender (a2-1), the molecular weight indicates an average value thereof, and it is only necessary for the average value to be included in the aforementioned preferable range of the molecular weight.

When the chain extender (a2-1) is used, the use rate thereof is more preferably in the range of 0.1 to 30% by mass, and particularly preferably in the range of 0.5 to 10% by mass based on the total mass of the raw materials constituting the urethane resin (X) from the viewpoint of obtaining more excellent mechanical strength, emulsifying property, water dispersion stability, and texture, as well as further facilitating high solidification of the urethane resin (X).

With respect to the polyisocyanate (a3), for example, an aromatic polyisocyanate such as phenylene diisocyanate, toluene diisocyanate, diphenylmethane diisocyanate, xylylene diisocyanate, naphthalene diisocyanate, polymethylene polyphenyl polyisocyanate, and carbodiimidized diphenylmethane polyisocyanate; an aliphatic polyisocyanate or alicyclic polyisocyanate, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate, and the like may be used. These polyisocyanates may be used alone or in combination of two or more.

The use rate of the polyisocyanate (a3) is more preferably in the range of 5 to 40% by mass, and particularly preferably in the range of 10 to 35% by mass, based on the total mass of the raw materials constituting the urethane resin (X) from the viewpoint of obtaining even more excellent mechanical strength.

The average particle size of the urethane resin (X) is preferably in the range of 0.01 to 1 µm, and more preferably in the range of 0.05 to 0.9 µm, from the viewpoint of obtaining even more excellent impregnation property into the fiber substrate, thermal coagulation property, and texture. A method for measuring the average particle size of the urethane resin (X) is disclosed in Examples which will be described later.

The content of the urethane resin (X) is, for example, in the range of 5 to 60% by mass in the urethane resin aqueous dispersion.

With respect to water (S) used in the invention, ion-exchanged water, distilled water and the like may be used. These kinds of water may be used alone or in combination of two or more. The water (S) may be further added at the time of processing after the urethane resin aqueous dispersion is produced.

The urethane resin aqueous dispersion of the invention contains the urethane resin (X) and water (S) as essential components. However, the urethane resin aqueous dispersion may contain other additives as necessary.

With respect to the other additives, for example, a nonionic emulsifier (Y2), a cationic emulsifier, a coagulant (Z), a neutralizing agent, a urethane formation catalyst, a filler, a pigment, a dye, a flame retardant, a leveling agent, an anti-blocking agent, a film-forming aid, a foaming agent and the like may be used. These additives may be used alone or in combination of two or more. An organic solvent may be used as the film-forming aid; however, it may be added and used later depending on the purpose of use of the urethane resin aqueous dispersion. Among these additives, the nonionic emulsifier (Y2) and the coagulant (Z) are preferably used from the viewpoint of obtaining even more excellent thermal coagulation property, and they are preferably blended at the time of processing after the urethane resin aqueous dispersion is produced.

With respect to the nonionic emulsifier (Y2), for example, polyoxyethylene nonyl phenyl ether, polyoxyethylene lauryl ether, polyoxyethylene styryl phenyl ether, polyoxyethylene sorbitol tetraoleate, a polyethylene-polypropylene copolymer and the like may be used. These emulsifiers may be used alone or in combination of two or more.

The amount of the nonionic emulsifier used is preferably 5 parts by mass or less, and more preferably in the range of 0 to 4.0 parts by mass with respect to 100 parts by mass of the urethane resin (X) (= solid content) from the viewpoint of obtaining even more excellent thermal coagulation property.

With respect to the coagulant (Z), for example, an inorganic salt, a thickener, a cross-linking agent and the like may be used. These coagulants may be used alone or in combination of two or more.

With respect to the inorganic salt, for example, a metal salt such as calcium nitrate, calcium chloride, zinc nitrate, zinc chloride, magnesium acetate, aluminum sulfate, and sodium chloride may be used. These inorganic salts may be used alone or in combination of two or more.

Examples of the thickener include cellulose derivatives such as hydroxyethylcellulose, methylcellulose, and carboxymethylcellulose; salts of polyacrylic acid, polyvinylpyrrolidone, urethane compounds, and polyether compounds. These thickeners may be used alone or in combination of two or more.

Examples of the cross-linking agent include a carbodiimide cross-linking agent, an isocyanate cross-linking agent, an epoxy cross-linking agent, and a melamine cross-linking agent. These cross-linking agents may be used alone or in combination of two or more.

The amount of the coagulant (Z) used is preferably 5 parts by mass or less, and more preferably in the range of 0.01 to 3.0 parts by mass with respect to 100 parts by mass of the urethane resin (X) (= solid content).

Next, a method for producing the urethane resin aqueous dispersion of the invention will be described.

Examples of the method for producing the urethane resin aqueous dispersion of the invention include a method including a step of obtaining a urethane prepolymer (i) having an isocyanate group by reacting the nonionic group-containing compound (a1), the polyol (a2), and the polyisocyanate (a3) in the absence of a solvent (hereinafter referred to as "prepolymer step" for short), then dispersing the urethane prepolymer (i) in the water (hereinafter referred to as "emulsification step" for short), and then obtaining a urethane resin (X) by reacting the chain extender (a1) (hereinafter referred to as "chain extension step" for short).

The prepolymer step is preferably performed in the absence of a solvent. Conventionally, the prepolymer step was generally carried out in an organic solvent such as methyl ethyl ketone and acetone; however, a solvent removal step of distilling off the organic solvent was required after the emulsification step, and it took several days for production at an actual production site. In addition, it is also difficult to completely distill off the organic solvent in the solvent removal step, and in many cases, some organic solvent remained, which made it difficult to be completely compatible with environment. On the other hand, in the production method according to the invention, by performing the prepolymer step in the absence of a solvent, a urethane resin aqueous dispersion completely free of organic solvents can be obtained and the production process thereof can also be labor-saving.

Further, when the prepolymer step was carried out by a conventional method using an organic solvent, the urethane resin might not be emulsified in the first place, or the particle size of the obtained urethane resin might become large even if the urethane resin could be emulsified, areas where a good urethane resin aqueous dispersion could be obtained were very limited. Although the reason thereof has not been clarified in detail, it is considered that one of the reasons is that an organic solvent, a neutralizing agent, or the like inhibits the ability of the hydrophilic group of the urethane resin during emulsification.

In contrast, in the invention, by preferably performing the prepolymer step in the absence of a solvent, it is possible to stably obtain, in an area that was particularly difficult for the conventional method, an aqueous dispersion of a urethane resin having a small amount of nonionic groups introduced and having an average particle size equivalent to that of the conventional method.

The molar ratio of isocyanate groups of the polyisocyanate (a3) to the total of hydroxyl groups and amino groups of the nonionic group-containing compound (a1) and hydroxyl groups of the polyol (a2) [isocyanate groups / (hydroxyl groups and amino groups)] in the prepolymer step is preferably in the range of 1.1 to 3 and more preferably in the range of 1.2 to 2 from the viewpoint of obtaining more excellent texture and mechanical strength.

The reaction of the prepolymer step may be carried out for 1 to 10 hours at 50 to 120°C, for example.

The prepolymer step may be carried out by using a reaction tank equipped with a stirring blade; a kneading machine such as a kneader, a continuous kneader, a taper roll, a single-screw extruder, a twin-screw extruder, a triple-screw extruder, a universal mixer, PLASTOMILL, and a BODEEDA type kneader; a rotary dispersion mixer such as a TK homomixer, FILMIX, EBARAMILDER, CLEARMIX, UltraTurrax, Cavitron, and a biomixer, etc.

The emulsification step is preferably carried out at a temperature at which water does not evaporate, for example, in the range of 10 to 90°C. The emulsification step may be carried out using the same equipment as those of the prepolymer step. Among the equipment, from the viewpoint of easily obtaining a urethane resin aqueous dispersion having a high content of urethane resin (X), it is preferable to use a kneader and more preferable to use a twin-screw extruder.

The chain extension step is a step of increasing the molecular weight of the urethane prepolymer (i) by reacting the isocyanate group of the urethane prepolymer (i) with the chain extender (a2-1) to obtain the urethane resin (X). The chain extension step is preferably carried out at a temperature of 90°C or lower from the viewpoint of productivity.

The molar ratio of the total of hydroxyl groups and amino groups of the chain extender (a2-1) to isocyanate groups of the urethane prepolymer (i) [(hydroxyl groups and amino groups) / isocyanate groups] in the chain extension step is preferably in the range of 0.8 to 1.1 and more preferably in the range of 0.9 to 1 from the viewpoint of obtaining more excellent texture and mechanical strength.

In addition to the same equipment as those of the prepolymer step, the chain extension step may be performed using, for example, an ultrasonic disperser; a device such as an in-line mixer that does not have moving parts and can mix by the flow of a fluid itself.

As described above, the urethane resin aqueous dispersion of the invention can be impregnated into a fiber substrate to be thermally coagulated, can reduce the detachment of the urethane resin from the fiber substrate in a step of dyeing an impregnated substrate, and can obtain an impregnated substrate having an excellent texture. Therefore, the urethane resin aqueous dispersion of the invention can be suitably used to produce a leather sheet.

Next, the leather sheet of the invention will be described.

The leather sheet is one in which a coagulated product of the urethane resin aqueous dispersion is present in a fiber substrate.

With respect to the fiber substrate, for example, fiber substrates such as polyester fiber, polyethylene fiber, nylon fiber, acrylic fiber, polyurethane fiber, acetate fiber, rayon fiber, polylactic acid fiber, cotton, linen, silk, wool, glass fiber, carbon fiber, and non-woven fabric, woven fabric, knitted fabric, etc. made of blended fibers thereof may be used.

Examples of methods for producing the leather sheet include a method of impregnating the fiber substrate with the urethane resin aqueous dispersion and then coagulating the urethane resin.

Examples of methods of impregnating the fiber substrate with the urethane resin aqueous dispersion include a method of directly immersing the fiber substrate in a tank in which the urethane resin aqueous dispersion is stored and squeezing the fiber substrate using a mangle or the like.

Next, in a method of coagulating the urethane resin (X), for example, the urethane resin (X) is coagulated by heating the fiber substrate impregnated with the urethane resin aqueous dispersion to a temperature equal to or higher than the thermal coagulation temperature of the urethane resin (X) (preferably 50°C to 130°C), and at the same time the water (S) contained in the urethane resin aqueous dispersion is evaporated. In this way, it is possible to obtain a leather sheet in which a coagulated product of urethane resin is present in a fiber substrate.

The leather sheet may be used for, for example, shoes, bags, clothing, a member of furniture such as a chair and a sofa, an automotive interior material such as a vehicle seat and a handle, a breathable-waterproof material, synthetic leather, artificial leather, a polishing material, a core material of felt-tipped pens, etc.

An intermediate layer, an adhesive layer, a surface layer, a surface treatment layer, and the like may be laminated on the leather sheet when necessary.

### Examples

The invention will be described in detail below with reference to Examples.

### [Example 1]

In the presence of 0.1 parts by mass of stannous octylate, 1,000 parts by mass of polyether polyol ("PTMG2000" manufactured by Mitsubishi Chemical Corporation, number average molecular weight: 2,000, hereinafter referred to as "PTMG2000" for short), 38 parts by mass of polyethylene glycol ("PEG600" manufactured by NOF Corporation, number average molecular weight: 600, hereinafter referred to as "PEG" for short), and 262 parts by mass of dicyclohexylmethane diisocyanate (hereinafter referred to as "HMDI" for short) were reacted at 100°C until NCO% reached 2.8% by mass to obtain a urethane prepolymer A1.

An emulsion was obtained by simultaneously supplying and mixing A1 heated to 70°C, a 20% by mass aqueous solution of sodium dodecylbenzenesulfonate ("NEOGEN S-20F" manufactured by Dai-ichi Kogyo Seiyaku Co., Ltd.) as an emulsifier, and water to a twin-screw extruder (TEM-18SS: manufactured by Toshiba Machine). The flow rate of each of the supplied liquids was as follows: A1: 10 kg/hour, the emulsifier aqueous solution: 2.0 kg/hour, water: 6.3 kg/hour, and the operating condition of the twin-screw extruder was 260 rpm at 50°C.

Then, an aqueous diluted solution of piperazine (hereinafter referred to as "PP" for short) having an amino group content equivalent to 95% of the NCO group was immediately added to extend the chain, and finally a urethane resin aqueous dispersion having a non-volatile content of 50% by mass was obtained.

### [Example 2]

In the presence of 0.1 parts by mass of stannous octylate, 1,000 parts by mass of PTMG2000, 18 parts by mass of PEG, and 262 parts by mass of HMDI were mixed and reacted at 100°C until NCO% reached 3.1% by mass to obtain a urethane prepolymer A2.

An emulsion was obtained by simultaneously supplying and mixing A2 heated to 70°C, a 20% by mass aqueous solution of sodium dodecylbenzenesulfonate ("NEOGEN S-20F" manufactured by Dai-ichi Kogyo Seiyaku Co., Ltd.) as an emulsifier, and water to a twin-screw extruder (TEM-18SS: manufactured by Toshiba Machine). The flow rate of each of the supplied liquids was as follows: A2: 10 kg/hour, the emulsifier aqueous solution: 2.5 kg/hour, water: 0.1 kg/hour, and the operating condition of the twin-screw extruder was 260 rpm at 50°C.

Then, an aqueous diluted solution of isophorone diamine (hereinafter referred to as "IPDA" for short) having an amino group content equivalent to 95% of the NCO group was immediately added to extend the chain, and finally a urethane resin aqueous dispersion having a non-volatile content of 60% by mass was obtained.

### [Example 3]

In the presence of 0.1 parts by mass of stannous octylate, 1,000 parts by mass of PTMG2000, 18 parts by mass of PEG, and 262 parts by mass of HMDI were mixed and reacted at 100°C until NCO% reached 3.1% by mass to obtain a urethane prepolymer A3.

An emulsion was obtained by simultaneously supplying and mixing A3 heated to 70°C, a polypropylene polyethylene copolymer ("Pluronic L-64" manufactured by ADEKA Corporation) as an emulsifier, and water to a twin-screw extruder (TEM-18SS: manufactured by Toshiba Machine). The flow rate of each of the supplied liquids was as follows: A3: 10 kg/hour, the emulsifier: 0.5 kg/hour, water: 5.8 kg/hour, and the operating condition of the twin-screw extruder was 260 rpm at 50°C.

Then, an aqueous diluted solution of IPDA having an amino group content equivalent to 95% of the NCO group was immediately added to extend the chain, and finally a urethane resin aqueous dispersion having a non-volatile content of 50% by mass was obtained.

### [Example 4]

In the presence of 0.1 parts by mass of stannous octylate, 1,000 parts by mass of PTMG2000, 18 parts by mass of PEG, and 262 parts by mass of HMDI were mixed and reacted at 100°C until NCO% reached 3.1% by mass to obtain a urethane prepolymer A5.

An emulsion was obtained by simultaneously supplying and mixing A5 heated to 70°C, a 20% by mass aqueous solution of sodium dodecylbenzenesulfonate ("NEOGEN S-20F" manufactured by Dai-ichi Kogyo Seiyaku Co., Ltd.) and a polypropylene polyethylene copolymer ("Pluronic L-64" manufactured by ADEKA Corporation) as emulsifiers, and water to a twin-screw extruder (TEM-18SS: manufactured by Toshiba Machine). The flow rate of each of the supplied liquids was as follows: A5: 10 kg/hour, the emulsifier aqueous solution S-20F: 1.3 kg/hour, the emulsifier L-64: 0.3 kg/hour, water: 1.1 kg/hour, and the operating condition of the twin-screw extruder was 260 rpm at 50°C.

Then, an aqueous diluted solution of ethylene diamine (hereinafter referred to as "EA" for short) having an amino group content equivalent to 95% of the NCO group was immediately added to extend the chain, and finally a urethane resin aqueous dispersion having a non-volatile content of 60% by mass was obtained.

### [Comparative Example 1]

In the presence of 0.1 parts by mass of stannous octylate, 1,000 parts by mass of PTMG2000, 150 parts by mass of PEG, and 262 parts by mass of HMDI were mixed and reacted at 100°C until NCO% reached 1.5% by mass to obtain a urethane prepolymer AR1.

An emulsion was obtained by simultaneously supplying and mixing AR1 heated to 70°C, a 20% by mass aqueous solution of sodium dodecylbenzenesulfonate ("NEOGEN S-20F" manufactured by Dai-ichi Kogyo Seiyaku Co., Ltd.) as an emulsifier, and water to a twin-screw extruder (TEM-18SS: manufactured by Toshiba Machine). The flow rate of each of the supplied liquids was as follows: AR1: 10 kg/hour, the emulsifier aqueous solution: 2.5 kg/hour, water: 7.3 kg/hour, and the operating condition of the twin-screw extruder was 260 rpm at 50°C.

Then, an aqueous diluted solution of PP having an amino group content equivalent to 95% of the NCO group was immediately added to extend the chain, and finally a urethane resin aqueous dispersion having a non-volatile content of 50% by mass was obtained.

### [Comparative Example 2]

A polyurethane emulsion having a urethane resin content of 40% by mass was obtained in the same manner as in Example 1 except that the flow rate of each of the supplied liquids in the emulsification step in Example 1 was changed as follows: A1: 10 kg/hour, the emulsifier aqueous solution: 5.0 kg/hour, and water: 10.4 kg/hour.

### [Comparative Example 3]

In the presence of 0.1 parts by mass of stannous octylate, 1,000 parts by mass of PTMG2000, 34 parts by mass of 2,2-dimethylolpropionic acid (hereinafter referred to as "DMPA" for short), and 262 parts by mass of HMDI were mixed and reacted at 100°C until NCO% reached 1.6% by mass to obtain a urethane prepolymer AR2.

An emulsion was obtained by simultaneously supplying and mixing AR2 heated to 70°C, triethylamine, a polypropylene polyethylene copolymer ("Pluronic L-64" manufactured by ADEKA Corporation) as an emulsifier, and water to a twin-screw extruder (TEM-18SS: manufactured by Toshiba Machine). The flow rate of each of the supplied liquids was as follows: AR2: 10 kg/hour, triethylamine: 0.2 kg/hour, the emulsifier aqueous solution: 0.5 kg/hour, water: 7.8 kg/hour, and the operating condition of the twin-screw extruder was 260 rpm at 50°C.

Then, an aqueous diluted solution of IPDA having an amino group content equivalent to 95% of the NCO group was immediately added to extend the chain, and finally a urethane resin aqueous dispersion having a non-volatile content of 50% by mass was obtained.

### [Method for measuring number average molecular weight, etc.]

The number average molecular weight of polyols and the like used in Examples and Comparative Examples indicates values obtained by measuring under the following conditions using a gel permeation column chromatography (GPC) method.

Measurement apparatus: High-speed GPC apparatus ("HLC-8220GPC" manufactured by Tosoh Corporation)
Columns: The columns shown below, manufactured by Tosoh Corporation, were connected in series and used.
   "TSKgel G5000" (7.8 mm I.D. × 30 cm) × 1
   "TSKgel G4000" (7.8 mm I.D. × 30 cm) × 1
   "TSKgel G3000" (7.8 mm I.D. × 30 cm) × 1
   "TSKgel G2000" (7.8 mm I.D. × 30 cm) × 1
Detector: RI (differential refractometer)
Column temperature: 40°C
Eluent: Tetrahydrofuran (THF)
Flow rate: 1.0 mL/minute
Amount of injection: 100 µL (tetrahydrofuran solution having a sample concentration of 0.4% by mass)
Standard sample: A calibration curve was prepared using the following standard polystyrenes.

### (Standard polystyrenes)

"TSKgel standard polystyrene A-500" manufactured by Tosoh Corporation
"TSKgel standard polystyrene A-1000" manufactured by Tosoh Corporation
"TSKgel standard polystyrene A-2500" manufactured by Tosoh Corporation
"TSKgel standard polystyrene A-5000" manufactured by Tosoh Corporation
"TSKgel standard polystyrene F-1" manufactured by Tosoh Corporation
"TSKgel standard polystyrene F-2" manufactured by Tosoh Corporation
"TSKgel standard polystyrene F-4" manufactured by Tosoh Corporation
"TSKgel standard polystyrene F-10" manufactured by Tosoh Corporation
"TSKgel standard polystyrene F-20" manufactured by Tosoh Corporation
"TSKgel standard polystyrene F-40" manufactured by Tosoh Corporation
"TSKgel standard polystyrene F-80" manufactured by Tosoh Corporation
"TSKgel standard polystyrene F-128" manufactured by Tosoh Corporation
"TSKgel standard polystyrene F-288" manufactured by Tosoh Corporation
"TSKgel standard polystyrene F-550" manufactured by Tosoh Corporation

### [Method for measuring the average particle size of the urethane resin (X)]

The average particle sizes of the urethane resin aqueous dispersions obtained in Examples and Comparative Examples were measured when the relative refractive index was 1.10 and the particle size reference was the area using water as a dispersing liquid and using a laser diffraction/scattering particle size distribution measuring apparatus ("LA-910" manufactured by HORIBA, Ltd.).

### [Method for evaluating thermal coagulation temperature]

After diluting such that a solid content in ion-exchanged water became 40% with respect to 100 parts by mass of the urethane resin aqueous dispersion obtained in Examples and Comparative Examples, 1.0% by mass of a nonionic emulsifier ("Pluronic L64" manufactured by ADEKA Corporation) based on the solid content of the aqueous dispersion, 2.5% by mass of sodium chloride based on the solid content of the aqueous dispersion, and 0.1% by mass of a thickener ("Borch Gel ALA" manufactured by Borchers Inc.) based on the solid content of the aqueous dispersion were added, and the mixture was stirred at 2,000 rpm for 2 minutes using a mechanical mixer to obtain a blended liquid.

The viscosity of the blended liquid was measured using a viscosity/viscoelasticity measuring apparatus ("Reo Stress" manufactured by HAAKE) while heating at 1 °C/minute. The temperature at which the viscosity exceeded 100 mPa · s was set as the thermal coagulation temperature (°C).

### [Method for evaluating resin detachment]

A non-woven fabric made of polyester fibers and having a mass per unit area of 300 g/m² was impregnated with the blended liquid obtained in the above [method for evaluating thermal coagulation temperature], and was then squeezed to have a wet pickup of 100%. Next, the non-woven fabric was dried at 120°C for 30 minutes using a gear type hot air dryer to completely evaporate the moisture contained in the processed fabric to obtain an impregnated fabric.

The impregnated fabric was immersed in a sodium acetate buffer (pH: 4.5), heated to 130°C, stirred at 120 rpm, washed with water, and then dried at 120°C for 5 minutes using a gear type hot air dryer. The detachment rate of the urethane resin was calculated from the weight change of the impregnated fabric before heating the sodium acetate buffer and after drying, and was evaluated as follows.
"A": Detachment rate is less than 10% by mass
"B": Detachment rate is 10% by mass or more and less than 50% by mass
"C": Detachment rate is 50% by mass or more

### [Method for evaluating texture]

The impregnated fabric obtained in the above [method for evaluating resin detachment] was evaluated by the feel of touch as follows.
"A": Rich in flexibility
"B": Somewhat flexible.
"C": Poor flexibility.
"D": Hard

**[Table 1]**

| Table 1 | | Ex. 1 | Ex. 2 | Ex. 3 | Ex. 4 |
|---|---|---|---|---|---|
| Nonionic group-containing compound (a1) | Type | PEG | PEG | PEG | PEG |
| | Use rate (mass%, in urethane raw material) | 2.9 | 1.5 | 1.5 | 1.5 |
| Other compounds having hydrophilic groups | | | | | |
| Content of urethane resin (X) (mass%) | | 50 | 60 | 60 | 60 |
| Average particle size of urethane resin (X) (µm) | | 0.17 | 0.19 | 0.18 | 0.18 |
| Anionic emulsifier (Y1) | Type | Anionic emulsifier | Anionic emulsifier | | Anionic emulsifier |
| | Content (part, to 100 parts by mass of urethane resin) | 5 | 5 | | 2.5 |
| Nonionic emulsifier (Y2) (during emulsification) | Type | | | Nonionic emulsifier | Nonionic emulsifier |
| | Content (part, to 100 parts by mass of urethane resin) | | | 5 | 2.5 |
| Nonionic emulsifier (Y2) (blended later) | Type | Nonionic emulsifier | Nonionic emulsifier | Nonionic emulsifier | Nonionic emulsifier |
| | Content (part, to 100 parts by mass of urethane resin) | 1 | 1 | 1 | 1 |
| Thermal coagulation temperature (°C) | | 55 | 55 | 65 | 62 |
| Evaluation of resin detachment | | A | A | A | A |
| Evaluation of texture | | A | A | A | A |

**[Table 2]**

| Table 2 | | Com. Ex. 1 | Com. Ex. 2 | Com. Ex. 3 |
|---|---|---|---|---|
| Nonionic group-containing compound (a1) | Type | PEG | PEG | |
| | Use rate (mass%, in urethane raw material) | 10.6 | 2.9 | 0 |
| Other compounds having hydrophilic groups | | | | DMPA |
| Content of urethane resin (X) (mass%) | | 50 | 40 | 50 |
| Average particle size of urethane resin (X) (µm) | | 0.15 | 0.09 | 0.12 |
| Anionic emulsifier (Y1) | Type | Anionic emulsifier | Anionic emulsifier | |
| | Content (part, to 100 parts by mass of urethane resin) | 5 | 10 | |
| Nonionic emulsifier (Y2) (during emulsification) | Type | | | Nonionic emulsifier |
| | Content (part, to 100 parts by mass of urethane resin) | | | 5 |
| Nonionic emulsifier (Y2) (blended later) | Type | Nonionic emulsifier | Nonionic emulsifier | Nonionic emulsifier |
| | Content (part, to 100 parts by mass of urethane resin) | 1 | 1 | 1 |
| Thermal coagulation temperature (°C) | | 54 | 56 | 65 |
| Evaluation of resin detachment | | B | B | C |
| Evaluation of texture | | A | A | C |

The abbreviations in Tables 1 and 2 are as follows.
"Anionic emulsifier": 20% by mass aqueous solution of sodium dodecylbenzenesulfonate ("NEOGEN S-20F" manufactured by Dai-ichi Kogyo Seiyaku Co., Ltd.)
"Nonionic emulsifier": polypropylene polyethylene copolymer ("Pluronic L-64" manufactured by ADEKA Corporation)

As shown in Examples 1 to 5, it has been found that the urethane resin aqueous dispersion of the invention can stably obtain an aqueous dispersion of a urethane resin and can be thermally coagulated. Further, the impregnated fabric having a coagulated product of the obtained urethane resin aqueous dispersion was capable of reducing resin detachment and had an excellent texture.

On the other hand, in Comparative Example 1, which is an embodiment in which the use rate of the nonionic group-containing compound (a1), which is a raw material of the urethane resin (X), exceeded the range specified in the invention, there was much resin detachment and it was inferior.

In Comparative Example 2, which is an embodiment in which the content of the anionic emulsifier (Y1) exceeded the range specified in the invention, there was much resin detachment and it was inferior.

In Comparative Example 3, which is an embodiment in which, instead of using the nonionic group-containing compound (a1), DMPA was used as a raw material and an evaluation was made with an anionic urethane resin, there was much resin detachment and the texture of the impregnated fabric was insufficient.

## Claims

1. An aqueous dispersion of a urethane resin (X) that uses a nonionic group-containing compound (a1) as a raw material, wherein
the nonionic group-containing compound (a1) has a use rate of 5% by mass or less based on a total mass of raw materials constituting the urethane resin (X),
the aqueous dispersion has an anionic emulsifier (Y1) content of 7 parts by mass with respect to 100 parts by mass of the urethane resin (X), and does not include an organic solvent during a production step.

2. A leather sheet, wherein a coagulated product of the urethane resin aqueous dispersion according to claim 1 is present in a fiber substrate.

3. A method for producing a leather sheet, including impregnating a fiber substrate with the urethane resin aqueous dispersion according to claim 1 and thermally coagulating the urethane resin aqueous dispersion.

4. The method for producing a leather sheet according to claim 3, wherein the urethane resin aqueous dispersion is further blended with a nonionic emulsifier (Y2) and a coagulant (Z).

5. The method for producing a leather sheet according to claim 4, wherein the nonionic emulsifier (Y2) is used in an amount of 5 parts by mass or less with respect to 100 parts by mass of the urethane resin (X).

6. The method for producing a leather sheet according to claim 4 or 5, wherein the coagulant (Z) is used in an amount of 5 parts by mass or less with respect to 100 parts by mass of the urethane resin (X).
